# EUROPÄISCHE PATENTANMELDUNG

(11) **EP 3 978 302 A1**
(43) Veröffentlichungstag der Anmeldung: **06.04.2022**
(21) Anmeldenummer: 20199645.1
(22) Anmeldetag: 01.10.2020
(51) Int. Cl.: B60L 50/60, B61B 7/06, B61B 12/02, B61D 43/00

(54) **SEILBAHNANLAGE UND VERFAHREN ZUM BETREIBEN EINER SEILBAHNANLAGE**

(71) Anmelder: Bartholet Maschinenbau AG, 8890 Flums (CH)
(72) Erfinder: STAMPFL, Raphael, CH-9442 Berneck (CH); MÜLLER-TONIOLO, Yves, CH-8890 Flums (CH); BARTHOLET, Roland, CH-8881 Tscherlach (CH); MENZI, Markus, CH-8758 Obstalden (CH)
(74) Vertreter: Dr. Graf & Partner AG

(57) **Zusammenfassung**

Ein Verfahren zum Betreiben einer Seilbahnanlage umfasst ein Befördern eines Fahrzeugs an einem Zugseil, wobei das Fahrzeug über eine Klemmvorrichtung lösbar an das Zugseil gekoppelt ist, ein Abkoppeln des Fahrzeugs von dem Zugseil, wobei die Klemmvorrichtung vom Zugseil gelöst und eine Laufrolle der Klemmvorrichtung derart an eine Führungsschiene gekoppelt wird, dass das Fahrzeug durch die Laufrolle an der Führungsschiene gehalten wird, ein Abbremsen des Fahrzeugs, ein selbsttätiges Fahren des Fahrzeugs entlang der Führungsschiene durch Betreiben einer kinematisch an die Laufrolle gekoppelten elektrischen Maschine des Fahrzeugs als Motor, wobei die elektrische Maschine durch eine elektrische Energiespeichervorrichtung des Fahrzeugs mit elektrischer Energie versorgt wird, ein Beschleunigen des Fahrzeugs mittels einer von aussen auf das Fahrzeug einwirkenden Beschleunigungsvorrichtung und ein Ankoppeln des Fahrzeugs an das Zugseil, wobei die Klemmvorrichtung mit dem Zugseil verbunden wird, wobei die elektrische Maschine des Fahrzeugs während des Abbremsens und/oder während des Beschleunigens als Generator betrieben und dadurch die elektrische Energiespeichervorrichtung des Fahrzeugs aufgeladen wird.

## Beschreibung

Die Erfindung betrifft eine Seilbahnanlage, ein Verfahren zum Betreiben einer Seilbahnanlage sowie eine Klemmvorrichtung.

### Stand der Technik

Das Dokument EP3137360B1 offenbart eine Seilbahnanlage mit Fahrzeugen. Diese Seilbahnanlage weist den Nachteil auf, dass die Fahrzeuge jeweils eine elektrische Batterie mit grosser Speicherkapazität benötigen, und dass aufwändig Massnahmen erforderlich sind diese Batterien zu laden.

### Darstellung der Erfindung

Aufgabe der Erfindung ist es, eine kostengünstigere, zuverlässigere und einfacher zu betreibende Seilbahnanlage zu bilden.

Diese Aufgabe wird jeweils durch die Gegenstände der unabhängigen Ansprüche gelöst. Vorteilhafte Ausführungsformen und Weiterbildungen sind Gegenstand der auf die unabhängigen Ansprüche rückbezogenen Unteransprüche sowie der nachfolgenden Beschreibung und der Figuren.

Nach einem ersten Aspekt der Erfindung ist ein Verfahren zum Betreiben einer Seilbahnanlage vorgesehen. Das Verfahren umfasst die folgenden Schritte:
- Befördern eines Fahrzeugs an einem Zugseil, wobei das Fahrzeug über eine Klemmvorrichtung lösbar an das Zugseil gekoppelt ist,
- Abkoppeln des Fahrzeugs von dem Zugseil, wobei die Klemmvorrichtung vom Zugseil gelöst und eine Laufrolle der Klemmvorrichtung derart an eine Führungsschiene gekoppelt wird, dass das Fahrzeug durch die Laufrolle an der Führungsschiene gehalten wird;
- Abbremsen des Fahrzeugs;
- selbsttätiges Fahren des Fahrzeugs entlang der Führungsschiene durch Betreiben einer kinematisch an die Laufrolle gekoppelten elektrischen Maschine des Fahrzeugs als Motor, wobei die elektrische Maschine durch eine elektrische Energiespeichervorrichtung des Fahrzeugs mit elektrischer Energie versorgt wird;
- Beschleunigen des Fahrzeugs mittels einer von aussen auf das Fahrzeug einwirkenden Beschleunigungsvorrichtung; und
- Ankoppeln des Fahrzeugs an das Zugseil, wobei die Klemmvorrichtung mit dem Zugseil verbunden wird.

Erfindungsgemäß wird die elektrische Maschine des Fahrzeugs während des Abbremsens und/oder während des Beschleunigens, vorzugsweise im Bereich einer Seilbahnstation, als Generator betrieben und dadurch die elektrische Energiespeichervorrichtung des Fahrzeugs aufgeladen. Erfindungsgemäss reicht die derart der elektrischen Energiespeichervorrichtung zugeführte elektrische Energie um mit dem Fahrzeug entlang einer Führungsschiene elektromotorisch selbsttätig zu fahren, und insbesondere innerhalb einer Seilbahnstation Wegstrecken zumindest abschnittweise mit Hilfe des elektromotorischen Antriebs selbstfahrend zurückzulegen. Die elektrische Energiespeichervorrichtung wird während eines Normalbetriebs der Seilbahnanlage einzig mit von der elektrischen Maschine erzeugten elektrischen Energie geladen. Bei einer Reparatur oder Wartung der Seilbahnanlage bzw. eines Fahrzeuges kann die elektrische Energiespeichervorrichtung auch ersetzt oder anlässlich der Wartung beispielsweise mit Netzstrom nachgeladen werden. Die elektrische Energiespeichervorrichtung wird während eines normalen Fahrbetriebs der Seilbahnanlage einzig durch die als Generator betriebene elektrische Maschine des Fahrzeugs aufgeladen, sodass keine separate Ladestation bzw. keine separate, fest angeordnete Stromzufuhr erforderlich ist, und das Fahrzeug somit keinerlei elektrische Kontakte benötigt, um eine elektrisch leitende Verbindung zu einer fest angeordneten Stromzufuhr bzw. zur Ladestation herzustellen. Ein Vorteil dieses Verfahrens liegt darin, dass dessen Betrieb wesentlich zuverlässiger ist, da zum Laden der elektrischen Energiespeichervorrichtung keine elektrischen Kontakte zu einer fest angeordneten Stromzufuhr erforderlich ist, sodass das Fahrzeug betreffend Stromzufuhr kontaktlos betrieben werden kann, da die elektrische Energie im Fahrzeug selbst erzeugt wird. Ein weiterer Vorteil dieses Verfahrens liegt darin, dass die Seilbahnanlage wesentlich kostengünstiger herstellbar ist, da auf elektrische Kontakte zwischen einer fest angeordneten Stromzufuhr, z.B. innerhalb der Seilbahnstation, und dem Fahrzeug verzichtet werden kann. Die Fahrzeuge bzw. die Seilbahnanlage sind deshalb zuverlässiger und verschliessarmer betreibbar. Ein weiterer Vorteil dieses Verfahrens liegt darin, dass die Führungsschienen für die Fahrzeuge sehr kostengünstig mit Weichen oder Kreuzungen versehen werden können, da die Fahrzeuge selbsttätig fahren können, und daher ausser der Führungsschiene keine weiteren Hilfsmittel zum Bewegen der Fahrzeuge erforderlich sind.

Nach einem zweiten Aspekt der Erfindung ist eine Seilbahnanlage vorgesehen. Die Seilbahnanlage umfasst eine Station, ein in die Station einlaufendes und ein aus der Station auslaufendes Zugseil, eine an der Station im Bereich des auslaufenden Zugseils angeordnete Beschleunigungsvorrichtung, eine sich im Bereich zwischen dem einlaufenden Zugseil und der Beschleunigungsvorrichtung erstreckende Führungsschiene und ein Fahrzeug mit einer Kabine, einer Klemmvorrichtung, welche zur lösbaren Kopplung an das jeweilige Zugseil ausgebildet ist und eine an die Führungsschiene koppelbare Laufrolle aufweist, einem Antrieb mit einer kinematisch an die Laufrolle gekoppelten elektrischen Maschine, welche als Motor und als Generator betreibbar ist, einer elektrischen Energiespeichervorrichtung, welche elektrisch mit der elektrischen Maschine verbunden ist, und einer mit der elektrischen Maschine verbundenen Steuerungsvorrichtung. Die Beschleunigungsvorrichtung ist dazu ausgebildet, das Fahrzeug vor einer Ankopplung der Klemmvorrichtung an das auslaufende Zugseil zu beschleunigen, während die Laufrolle in einem an die Führungsschiene gekoppelten Zustand ist. Weiterhin ist die Steuerungsvorrichtung dazu eingerichtet, die elektrische Maschine während des Beschleunigens des Fahrzeugs durch die Beschleunigungsvorrichtung als Generator zu betreiben und die elektrische Maschine im Bereich zwischen dem einlaufenden Zugseil und der Beschleunigungsvorrichtung zumindest abschnittweise als Motor zu betreiben. Die Beschleunigungsvorrichtung ist vorzugsweise als ein sogenannter Pneuförderer ausgestaltet, vorzugsweise als ein Standardpneuförderer, wie dieser bereits heute bei Seilbahnanlagen zum Abbremsen oder zum Beschleunigen von Fahrzeugen üblicherweise zum Einsatz gelangt.

Erfindungsgemäß ist ein Fahrzeug einer Seilbahnanlage mit einer elektrischen Maschine zu versehen, welche das Fahrzeug innerhalb einer Station antreibt, so dass das Fahrzeug innerhalb der Station selbsttägig entlang einer Führungsschiene bewegt wird, an welche es über eine Laufrolle gekoppelt ist. Die elektrische Maschine wird hierbei als Motor betrieben, über einen elektrischen Akkumulator, welcher im Fahrzeug verbaut ist, mit elektrischer Energie versorgt und treibt die Laufrolle an.

Eine der Erfindung zugrundeliegende Idee besteht darin, den Akkumulator oder die elektrische Energiespeichervorrichtung dadurch zu laden, dass das Fahrzeug beim Ausfahren aus der Station mittels einer in der Station verbauten Beschleunigungsvorrichtung beschleunigt wird, wodurch der an der Führungsschiene abrollenden Laufrolle kinetische Energie zugeführt wird, welche durch die während des Beschleunigens als Generator betriebene elektrische Maschine in elektrische Energie umgewandelt und in die Energiespeichervorrichtung eingespeist wird. Alternativ oder zusätzlich kann auch beim Abbremsen des Fahrzeugs beim Einfahren in die Station in gleicher Weise kinetische Energie des Fahrzeugs in elektrische Energie umgewandelt werden. Zum Abbremsen des Fahrzeugs wird vorzugsweise ebenfalls ein Pneuförderer verwendet, vorzugsweise ebenfalls ein Standardpneuförderer, wie dieser bereits heute bei Seilbahnanlagen üblicherweise zum Einsatz gelangt.

Ein Vorteil dieser Verfahrensweise liegt darin, dass die elektrische Maschine nicht selbst zur Beschleunigung des Fahrzeugs verwendet wird, sondern die Beschleunigung des Fahrzeugs durch die externe Beschleunigungsvorrichtung erfolgt. Dadurch kann die elektrische Maschine mit geringerer Leistung ausgelegt und mit einem kompakten Aufbau realisiert werden. Ferner kann durch die Beschleunigungsvorrichtung auf effiziente Weise eine Beschleunigung des Fahrzeugs umgesetzt und gleichzeitig eine effiziente Rekuperation bzw. Aufladung des elektrischen Energiespeichers des Fahrzeugs erfolgen. Es ist heute üblich, dass Seilbahnanlagen mit als Pneuförderer ausgestaltete Beschleunigungsvorrichtungen und Abbremsvorrichtungen für Fahrzeuge aufweisen. Das erfindungsgemässe Verfahren bzw. die erfindungsgemässe Seilbahnanlange weist den Vorteil auf, dass für Neuanlagen aufweisend das erfindungsgemässe Konzept vorteilhafterweise bestehende, bewährte Pneuförderer verwendet werden können. Zudem ist es auf einfache Weise möglich bestehende Seilbahnanlangen mit dem erfindungsgemässen Konzept zu modifizieren, da die als Beschleunigungsvorrichtungen und Abbremsvorrichtungen ausgestalteten Pneuförderer beibehalten werden können.

Gemäß manchen Ausführungsformen kann vorgesehen sein, dass die elektrische Maschine des Fahrzeugs während des Abbremsens als Generator betrieben wird, um das Fahrzeug abzubremsen. Falls die beim Einfahren in eine Seilbahnstation im Fahrzeug gespeicherte kinetische Energie zu gering sein sollte um mit Hilfe der als Generator betriebenen elektrischen Maschine die Energiespeichervorrichtung während dem Abbremsen des Fahrzeugs genügend zu laden, so kann dem Fahrzeug während des Abbremsens, falls erforderlich, mittels einer von aussen auf das Fahrzeug einwirkenden Antriebs- bzw. Bremsvorrichtung, beispielsweise ausgestaltet als ein Pneuförderer, zusätzliche Antriebsenergie zugeführt wird, und wobei diese zusätzliche Antriebsenergie während des Abbremsens von der als Generator betriebenen elektrischen Maschine aufgenommen wird und dadurch die elektrische Energiespeichervorrichtung aufgeladen wird. Somit kann die während dem Abbremsen des Fahrzeugs durch den Generator erzeugte Energie durch eine in der Station verbaute Antriebsvorrichtung unterstützt werden. Weiterhin kann dadurch zusätzliche Energie zum Aufladen der elektrischen Energiespeichervorrichtung zurückgewonnen werden.

Die Beschleunigungsvorrichtung und/oder die Antriebsvorrichtung können beispielsweise als Pneuförderer realisiert sein. Beispielsweise kann ein Pneuförderer mehrere hintereinander in einer Reihe angeordneter, drehbar gelagerter Pneus oder Reifen aufweisen, welche mit entlang der Reihe zunehmender oder entlang der Reihe abnehmender Rotationsgeschwindigkeit angetrieben werden. Das Fahrzeug kann somit mit einem Pneuförderer beschleunigt und/oder abgebremst werden.

Gemäß manchen Ausführungsformen kann vorgesehen sein, dass das Fahrzeug beim Abbremsen von einer Zugseilgeschwindigkeit auf eine erste Schienengeschwindigkeit abgebremst wird, wobei das Fahrzeug danach von der als Motor betriebenen elektrischen Maschine angetrieben wird und das Fahrzeug selbsttätig fahrend mit einer zweiten Schienengeschwindigkeit entlang der Führungsschiene gefördert wird. Vorzugsweise sind die erste und die zweite Schienengeschwindigkeit gleich. Die zweite Schienengeschwindigkeit kann insbesondere kleiner 1m/s sein und kann beispielsweise in einem Bereich zwischen 0,2 m/s und 0,5 m/s liegen.

Gemäß manchen Ausführungsformen kann vorgesehen sein, dass die elektrische Maschine des Fahrzeugs während des Beschleunigens als Generator betrieben und dadurch die elektrische Energiespeichervorrichtung aufgeladen wird.

Gemäß manchen Ausführungsformen kann vorgesehen sein, dass die Laufrolle vor dem Abkoppeln durch Betreiben der elektrischen Maschine als Motor auf eine Drehzahl beschleunigt wird, bei welcher eine Bahngeschwindigkeit einer Kontaktfläche der Laufrolle im Bereich der Zugseilgeschwindigkeit des Zugseils liegt. Dadurch wird ein besonders sanftes und verschleißarmes Abkoppeln des Fahrzeuges vom Zugseil ermöglicht.

Gemäß manchen Ausführungsformen kann vorgesehen sein, dass die Seilbahnanlage eine an der Station im Bereich des einlaufendes Zugseils angeordnete Antriebsvorrichtung aufweist, wobei die Steuerungsvorrichtung dazu eingerichtet ist, die elektrische Maschine während des Antriebs des Fahrzeugs durch die Antriebsvorrichtung und/oder während des Beschleunigens des Fahrzeugs durch die Beschleunigungsvorrichtung als Generator zu betreiben und die elektrische Maschine im Bereich zwischen der Antriebsvorrichtung und der Beschleunigungsvorrichtung zumindest abschnittweise als Motor zu betreiben.

Gemäß manchen Ausführungsformen kann vorgesehen sein, dass die Klemmvorrichtung ein Traggestell aufweist, an welchem die Laufrolle um eine Drehachse drehbar gelagert ist und an welchem der Antrieb angebracht ist. Das Traggestell kann beispielsweise eine Platte aufweisen, wobei auf einer Seite der Platte der Antrieb mit der elektrischen Maschine und auf einer anderen Seite der Platte die Laufrolle angeordnet ist. Somit wird ein kompakter und stabiler Aufbau der Klemmvorrichtung realisiert.

Gemäß manchen Ausführungsformen kann vorgesehen sein, dass der Antrieb ein Gehäuse, eine erste elektrische Maschine, eine zweite elektrische Maschine und ein an die erste und die zweite elektrische Maschine kinematisch gekoppeltes Getriebe mit einer Verbindungswelle aufweist, welche mit der Laufrolle verbunden ist, wobei die erste und die zweite elektrische Maschine sowie das Getriebe in dem Gehäuse aufgenommen sind. Insbesondere kann vorgesehen sein, dass das Getriebe einen erstes Teilgetriebe und ein zweites Teilgetriebe aufweist, wobei die erste elektrische Maschine zur Drehmomentübertragung an eine Eingangsschnittstelle des ersten Teilgetriebes gekoppelt ist, eine Ausgangsschnittstelle des ersten Teilgetriebes zur Drehmomentübertragung an eine erste Eingangsschnittstelle des zweiten Teilgetriebes gekoppelt ist, die zweite elektrische Maschine zur Drehmomentübertragung an eine parallel zur ersten Eingangsschnittstelle geschaltete zweite Eingangsschnittstelle des zweiten Teilgetriebes gekoppelt ist und die Verbindungswelle eine Ausgangsschnittstelle des zweiten Teilgetriebes bildet. Somit können die Drehmomente von erster und zweiter elektrischer Maschine vorteilhaft überlagert werden. Dies erleichtert den Betrieb der elektrischen Maschinen in einem Drehzahlbereich, in dem diese jeweils ein hohes Drehmoment erzeugen und mit hohem Wirkungsgrad betrieben werden können.

Gemäß manchen Ausführungsformen umfasst das Getriebe optional ein erstes Planetengetriebe, welches z.B. ein erstes Teilgetriebe bildet, und ein zweites Planetengetriebe, welches z.B. ein zweites Teilgetriebe bildet.

Gemäß manchen Ausführungsformen kann das erste Planetengetriebe ein erstes Sonnenrad, welches mit einer Rotorwelle der ersten elektrischen Maschine verbunden ist, ein erstes Hohlrad, welches ortsfest in dem Gehäuse angeordnet ist, und zumindest zwei erste Planetenräder aufweisen, welche an einem ersten Planetenträger gelagert sind und mit dem ersten Sonnenrad und dem ersten Hohlrad in Eingriff stehen. Das Sonnenrad bildet hierbei die Eingangsschnittstelle des ersten Teilgetriebes und der Planetenträger bildet die erste Ausgangsschnittstelle des ersten Teilgetriebes. Somit wird eine Wandlung einer relativ hohen Drehzahl des Rotors der ersten elektrischen Maschine, welche beim selbsttätigen Fahren des Fahrzeugs in der Station beispielsweise in einem Bereich zwischen 2.500 und 3.500 Umdrehungen pro Minute liegen kann, in ein großes Drehmoment bei einem hohen Wirkungsgrad der elektrischen Maschine erleichtert.

Gemäß manchen Ausführungsformen kann das zweite Planetengetriebe einen drehbar in dem Gehäuse gelagerten zweiten Planetenträger, zumindest zwei an dem zweiten Planetenträger drehbar gelagerte zweite Planetenräder, ein drehfest mit dem ersten Planetenträger verbundenes zweites Sonnenrad, welches mit den zweiten Planetenrädern in Eingriff steht, und ein Verbindungsrad aufweisen, an welchem die Verbindungswelle befestigt ist und welches mit den zweiten Planetenrädern in Eingriff steht. Der zweite Planetenträger bildet hierbei die zweite Eingangsschnittstelle des zweiten Teilgetriebes bilden. Das Verbindungsrad kann beispielsweise die zweite Ausgangsschnittstelle des zweiten Teilgetriebes bilden.

Gemäß manchen Ausführungsformen kann die zweite elektrische Maschine einen Stator und einen innerhalb des Stators angeordneten Hohlrotor aufweisen, welcher mit dem zweiten Planetenträger verbunden ist, insbesondere drehfest, wobei das zweite Planetengetriebe innerhalb des Hohlrotors angeordnet ist. Dadurch ergibt sich vorteilhaft ein besonders kompakter Aufbau des Antriebs.

Die beschriebene Ausführungsform ermöglicht eine stufenlose Einstellung der Drehzahl der Verbindungswelle und damit der Laufrolle. Bei gegebener Drehzahl der ersten elektrischen Maschine kann beispielsweise durch die Drehrichtung und die Drehzahl der zweiten elektrischen Maschine die Drehzahl der Verbindungswelle zwischen 0 und einem Maximalwert eingestellt werden. Ein weiterer Vorteil liegt darin, dass beispielsweise die erste elektrische Maschine über einen großen Drehzahlbereiche der Verbindungswelle zwischen 0 und dem Maximalwert in einem Drehzahlbereich betrieben werden kann, in welchem sie ein hohes Drehmoment bei hohem Wirkungsgrad liefert.

Gemäß manchen Ausführungsformen kann vorgesehen sein, dass die zweiten Planetenräder jeweils einen mit dem zweiten Sonnenrad in Eingriff stehenden ersten Zahnkranz und einen mit dem Verbindungsrad in Eingriff stehenden zweiten Zahnkranz aufweisen. Somit kann das zweite Planetengetriebe als zweistufiges Planetengetriebe realisiert sein.

Gemäß manchen Ausführungsformen kann vorgesehen sein, dass die Verbindungswelle und die Rotorwelle der ersten elektrischen Maschine koaxial zueinander angeordnet sind.

Gemäß einem dritten Aspekt der Erfindung ist eine Klemmvorrichtung zur lösbaren Verbindung einer Kabine mit einem Zugseil einer Seilbahnanlage vorgesehen. Die Klemmvorrichtung umfasst ein Traggestell, eine an dem Traggestell drehbar gelagerte Laufrolle, und einen Antrieb mit einem Gehäuse, einer ersten elektrischen Maschine, einer zweiten elektrische Maschine und einem an die erste und die zweite elektrische Maschine kinematisch gekoppeltes Getriebe mit einer Verbindungswelle, welche mit der Laufrolle verbunden ist, wobei die erste und die zweite elektrische Maschine sowie das Getriebe in dem Gehäuse aufgenommen sind. Das Getriebe weist ein erstes Planetengetriebe und ein zweites Planetengetriebe auf. Das erste Planetengetriebe weist ein erstes Sonnenrad, welches mit einer Rotorwelle der ersten elektrischen Maschine verbunden ist, ein erstes Hohlrad, welches ortsfest in dem Gehäuse angeordnet ist, und zumindest zwei erste Planetenräder auf, welche an einem ersten Planetenträger gelagert sind und mit dem ersten Sonnenrad und dem ersten Hohlrad in Eingriff stehen. Das zweite Planetengetriebe weist einen drehbar in dem Gehäuse gelagerten zweiten Planetenträger, zumindest zwei an dem zweiten Planetenträger drehbar gelagerte zweite Planetenräder, ein drehfest mit dem ersten Planetenträger verbundenes zweites Sonnenrad, welches mit den zweiten Planetenrädern in Eingriff steht, und ein Verbindungsrad auf, an welchem die Verbindungswelle befestigt ist und welches mit den zweiten Planetenrädern in Eingriff steht. Der zweite Planetenträger kann beispielsweise eine zweite Eingangsschnittstelle des zweiten Teilgetriebes bilden. Das Verbindungsrad kann beispielsweise eine Ausgangsschnittstelle des zweiten Teilgetriebes bilden. Die zweite elektrische Maschine weist einen Stator und einen innerhalb des Stators angeordneten Hohlrotor aufweist, welcher mit dem zweiten Planetenträger verbunden ist, wobei das zweite Planetengetriebe innerhalb des Hohlrotors angeordnet ist.

Die in Zusammenhang mit einem Aspekt der Erfindung offenbarten Merkmale und Vorteil sind jeweils auch für die anderen Aspekte der Erfindung offenbart.

Gemäß einem weiteren Aspekt der vorliegenden Offenbarung ist ein Antrieb für ein Fahrzeug vorgesehen. Der Antrieb kann beispielsweise für ein Fahrzeug einer Seilbahnanlage vorgesehen sein, ist jedoch nicht hierauf beschränkt. Beispielsweise kann der Antrieb auch in einem Straßenfahrzeug, wie z.B. einem Automobil, einem Motorrad, einem Fahrrad oder dergleichen, einem Schienenfahrzeug oder einem Luftfahrzeug eingesetzt werden.

Der Antrieb gemäß diesem Aspekt der Offenbarung umfasst ein Gehäuse, eine in dem Gehäuse aufgenommene erste elektrische Maschine mit einem Stator und einem Rotor, ein in dem Gehäuse aufgenommenes erstes Teilgetriebe mit einer an den Rotor gekoppelten Eingangsschnittstelle und einer ersten Ausgangsschnittstelle, wobei das erste Teilgetriebe dazu ausgebildet ist, ein Drehmoment zwischen der Eingangsschnittstelle und der ersten Ausgangsschnittstelle zu wandeln, eine in dem Gehäuse aufgenommene zweite elektrische Maschine mit einem Rotor und einem Stator, und ein zweites Teilgetriebe mit einer an die erste Ausgangsschnittstelle des ersten Teilgetriebes gekoppelten ersten Eingangsschnittstelle, einer mit dem Rotor der zweiten elektrischen Maschine verbundenen zweiten Eingangsschnittstelle und einer zweiten Ausgangsschnittstelle, wobei das zweite Teilgetriebe dazu ausgebildet ist, ein Drehmoment der ersten Eingangsschnittstelle und ein Drehmoment der zweiten Eingangsschnittstelle zu überlagern und die Drehmomente der ersten und der zweiten Eingangsschnittstelle in ein Drehmoment der Ausgangsschnittstelle zu wandeln und umgekehrt.

Somit können die Drehmomente von erster und zweiter elektrischer Maschine vorteilhaft überlagert werden. Dies erleichtert den Betrieb der elektrischen Maschinen in einem Drehzahlbereich, in dem diese jeweils ein hohes Drehmoment erzeugen und mit hohem Wirkungsgrad betrieben werden können. Weiterhin wird eine stufenlose Einstellung der Drehzahl an der zweiten Ausgangsschnittstelle ermöglicht. Bei gegebener Drehzahl der ersten elektrischen Maschine kann beispielsweise durch die Drehrichtung und die Drehzahl der zweiten elektrischen Maschine die Drehzahl der Verbindungswelle zwischen 0 und einem Maximalwert eingestellt werden. Ein weiterer Vorteil liegt darin, dass beispielsweise die erste elektrische Maschine über einen großen Drehzahlbereiche der Verbindungswelle zwischen 0 und dem Maximalwert in einem Drehzahlbereich betrieben werden kann, in welchem sie ein hohes Drehmoment bei hohem Wirkungsgrad liefert. Insbesondere, wenn die zweite Ausgangsschnittstelle unter Last aus dem Stillstand auf eine Drehzahl größer Null beschleunigt werden soll, können die erste und die zweite elektrische Maschine zunächst mit entgegengesetzten Drehrichtungen rotieren, so dass die erste elektrische Maschine in einen Drehzahlbereich gefahren werden kann, in dem sie einen hohen Wirkungsgrad aufweist und ein hohes Drehmoment liefert. Anschließend kann die zweite elektrische Maschine derart betrieben werden, dass sie ein Drehmoment liefert, welches im zweiten Teilgetriebe dem der ersten elektrischen Maschine überlagert wird, so dass an der zweiten Ausgangsschnittstelle ein Drehmoment größer Null bereitgestellt wird.

Optional kann vorgesehen sein, dass das erste Teilgetriebe durch ein erstes Planetengetriebe und das zweite Teilgetriebe durch ein zweites Planetengetriebe ausgebildet ist.

Gemäß manchen Varianten dieses Aspekts der Offenbarung kann das erste Planetengetriebe ein erstes Sonnenrad, welches mit einer Rotorwelle der ersten elektrischen Maschine verbunden ist, ein erstes Hohlrad, welches ortsfest in dem Gehäuse angeordnet ist, und zumindest zwei erste Planetenräder aufweisen, welche an einem ersten Planetenträger gelagert sind und mit dem ersten Sonnenrad und dem ersten Hohlrad in Eingriff stehen. Das Sonnenrad bildet hierbei die Eingangsschnittstelle des ersten Teilgetriebes und der Planetenträger bildet die erste Ausgangsschnittstelle des ersten Teilgetriebes. Somit wird eine Wandlung einer relativ hohen Drehzahl des Rotors der ersten elektrischen Maschine, welche beim selbsttätigen Fahren des Fahrzeugs in der Station beispielsweise in einem Bereich zwischen 2.500 und 3.500 Umdrehungen pro Minute liegen kann, in ein großes Drehmoment bei einem hohen Wirkungsgrad der elektrischen Maschine erleichtert.

Gemäß weiteren Varianten diese Aspekts der Offenbarung kann das zweite Planetengetriebe einen drehbar in dem Gehäuse gelagerten zweiten Planetenträger, zumindest zwei an dem zweiten Planetenträger drehbar gelagerte zweite Planetenräder, ein drehfest mit dem ersten Planetenträger verbundenes zweites Sonnenrad, welches mit den zweiten Planetenrädern in Eingriff steht, und ein Verbindungsrad aufweisen, an welchem die Verbindungswelle befestigt ist und welches mit den zweiten Planetenrädern in Eingriff steht. Der zweite Planetenträger bildet hierbei die zweite Eingangsschnittstelle des zweiten Teilgetriebes bilden. Das Verbindungsrad kann beispielsweise die zweite Ausgangsschnittstelle des zweiten Teilgetriebes bilden.

Gemäß manchen Varianten dieses Aspekts der Offenbarung kann die zweite elektrische Maschine einen Stator und einen innerhalb des Stators angeordneten Hohlrotor aufweisen, welcher mit dem zweiten Planetenträger verbunden ist, insbesondere drehfest, wobei das zweite Planetengetriebe innerhalb des Hohlrotors angeordnet ist. Dadurch ergibt sich vorteilhaft ein besonders kompakter Aufbau des Antriebs.

Der nach diesem Aspekt der Offenbarung beschriebene Antrieb kann beispielsweise als Antrieb eines Fahrzeugs, insbesondere eines Kraftfahrzeugs, eines Motorrads, eines Fahrrads, eines Schienenfahrzeugs oder eines Luftfahrzeugs eingesetzt werden. Es ist jedoch auch denkbar, dass der Antrieb den Antrieb eines Fahrzeugs der Seilbahnanlage nach dem zweiten Aspekt der oben beschriebenen Erfindung oder der Klemmvorrichtung nach dem dritten Aspekt der oben beschriebenen Erfindung bildet. Auch kann der Antrieb in dem Verfahren nach dem ersten Aspekt der oben beschriebenen Erfindung eingesetzt werden. Somit sind sämtliche Merkmale und Vorteile, die für diesen Aspekt der Offenbarung beschrieben wurden, auch für die Aspekte der Erfindung offenbart und umgekehrt.

In einer vorteilhaften Ausgestaltung umfasst die erfindungsgemässe Seilbahnanlage eine Mehrzahl von Stationen, beispielsweise drei, vier oder fünf Stationen, wobei zumindest eine der Stationen, eine sogenannte Verzweigungsstationen, über Zugseile mit zumindest drei anderen Stationen verbunden ist, wobei die Verzweigungsstation Führungsschienen mit ansteuerbaren Weichen aufweist, sodass die sich innerhalb der Verzweigungsstationen selbstfahrend entlang den Führungsschienen bewegenden Fahrzeuge über die ansteuerbaren Weichen wahlweise an eine der drei anderen Stationen zugeleitet werden können. Dadurch, dass die Fahrzeuge selbstfahren sind, können die Führungsschienen auf einfache Weise mit Weichen und/oder Kreuzungen versehen sein, welche von den Fahrzeugen befahrbar sind, wobei diese Weichen und Kreuzungen vorzugsweise sehr kostengünstig ausgestaltet sind. Die erfindungsgemässe Seilbahnanlage kann in einer vorteilhaften Ausgestaltung als Netzwerk umfassend eine Vielzahl von Stationen ausgestaltet sein, wobei zumindest eine der Stationen und vorzugsweise eine Mehrzahl von Stationen als Verzweigungsstationen ausgestaltet sind, sodass jedes Fahrzeuge, durch ein entsprechendes Stellen der Weichen, wählbar eine einzige oder mehrere aus der Vielzahl von Stationen anfahren kann, und sich in einer Vielzahl von Möglichkeiten im Netzwerk bewegen kann.

### Kurze Beschreibung der Zeichnungen

Die zur Erläuterung der Ausführungsbeispiele verwendeten Zeichnungen zeigen in:
- Fig. 1: eine schematische Darstellung einer Seilbahnanlage gemäß einem Ausführungsbeispiel der Erfindung;
- Fig. 2: eine schematische Darstellung eines Blockschaltbilds einer Seilbahnanlage gemäß einem Ausführungsbeispiel der Erfindung;
- Fig. 3: eine perspektivische Teilansicht einer an ein Zugseil gekoppelten Klemmvorrichtung gemäß einem Ausführungsbeispiel der Erfindung, wobei die Kabine des Fahrzeuges schematisch dargestellt ist;
- Fig. 4: eine perspektivische Ansicht einer Klemmvorrichtung des in Fig. 3 gezeigten Fahrzeugs;
- Fig. 5: eine schematische Teilansicht einer Seilbahnanlage gemäß einem Ausführungsbeispiel der Erfindung in einem Zustand, in welchem das Fahrzeug durch einen ersten Pneuförderer abgebremst wird;
- Fig. 6: eine perspektivische Teilansicht eines als Beschleunigungsvorrichtung ausgestalteten zweiten Pneuförderers;
- Fig. 7: eine schematische Schnittansicht einer Antriebseinheit einer Seilklemme gemäß einem Ausführungsbeispiel der Erfindung;
- Fig. 8: ein Flussdiagramm eines Verfahrens zum Betreiben einer Seilbahnanlage gemäß einem Ausführungsbeispiel der Erfindung;
- Fig. 9: einen Schnitt entlang der Schnittlinie A-A durch das erste Getriebe;
- Fig. 10: einen Schnitt entlang der Schnittlinie B-B durch das zweite Getriebe.

Grundsätzlich sind in den Zeichnungen gleiche Teile mit gleichen Bezugszeichen versehen, sofern nichts Gegenteiliges angegeben ist.

### Wege zur Ausführung der Erfindung

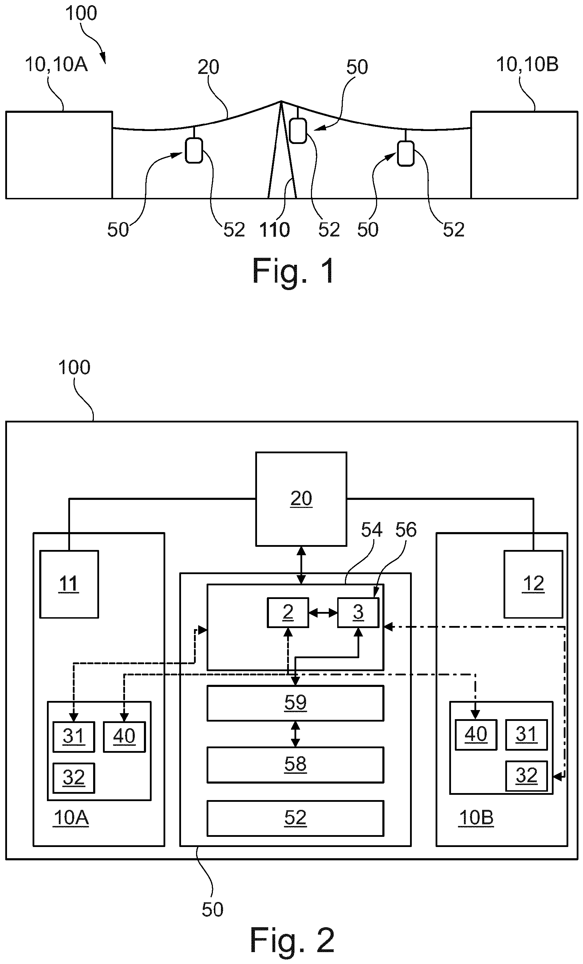

Fig. 1 zeigt beispielhaft eine Seilbahnanlage 100 in einer schematischen Darstellung. Fig. 2 zeigt beispielhaft ein Blockschaltbild einer Seilbahnanlage.

Wie in Fig. 1 schematisch dargestellt kann die Seilbahnanlage 100 eine oder mehrere Stationen 10, insbesondere eine erste Station 10A und eine zweite Station 10B, ein in eine jeweilige Station 10 einlaufendes und auslaufendes Zugseil 20 und ein oder mehrere Fahrzeug 50 aufweisen, welche außerhalb der Station 10, z.B. zwischen der ersten und der zweiten Station 10A, 10B an dem bzw. durch das Zugseil 20 befördert werden. Das Zugseil 20 ist vorzugsweise endlos ausgestaltet und wird vorzugsweise innerhalb jeder Station 10A, 10B um 180° umgelenkt, sodass die Seilbahnanlagen 100 zwischen den Stationen 10A, 10B zwei sich gegenläufig bewegende Zugseilabschnitte aufweist, wobei in

Figur 1 nur einer der beiden Zugseilabschnitte sichtbar ist. In Fig. 1 ist rein beispielhaft gezeigt, dass die Fahrzeuge 50 hängend an einem Seil, z.B. dem Zugseil 20 oder einem separaten Tragseil (nicht gezeigt), zwischen den Stationen 10A, 10B bewegt werden. Das Zugseil 20 und gegebenenfalls das optionale Tragseil können zwischen den Stationen 10A, 10B optional durch einen oder mehrere Masten oder Träger 110 gestützt sein, wie dies in Fig. 1 beispielhaft dargestellt ist.

Fig. 2 zeigt rein beispielhaft ein Blockschaltbild einer Seilbahnanlage 100. Wie in Fig. 2 beispielhaft gezeigt, kann die Seilbahnanlage eine Station 10, z.B. eine erste Station 10A und eine zweite Station 10B, ein in die jeweilige Station 10A, 10B einlaufendes und ein aus der jeweiligen Station 10B auslaufendes Zugseil 20 und ein Fahrzeug 50 aufweisen.

Wie in Fig. 2 beispielhaft gezeigt, kann jede Station 10A, 10B eine Antriebs- oder Abbremsvorrichtung 31, z.B. in Form eines ersten Pneuförderers, eine Beschleunigungsvorrichtung 32, z.B. in Form eines zweiten Pneuförderers, und eine Führungsschiene 40 aufweisen. In Fig. 2 ist ferner schematisch dargestellt, dass die erste Station 10A einen Seilantrieb 11 zum Antreiben des Zugseils 20 und die zweite Station 10B einen Zugseilumlenkrad 12 zum Umlenken des Zugseils 20 aufweist. Selbstverständlich können auch in beiden Stationen 10A, 10B Seilantriebe 11 vorgesehen sein.

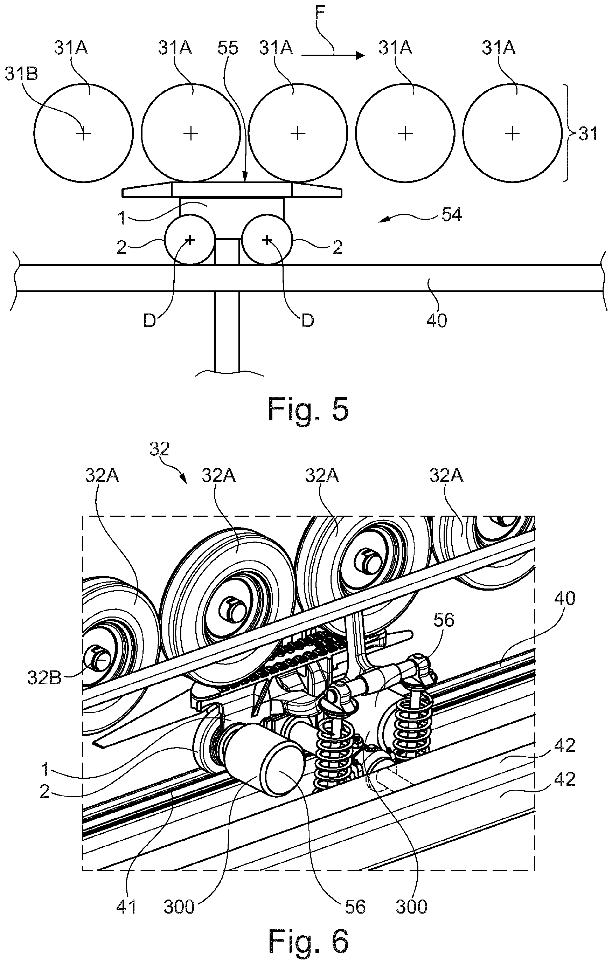

Die Stationen 10A, 10B können beispielsweise durch Bauwerke realisiert sein, in welche das Zugseil 20 ein- und ausläuft, wie dies in Fig. 1 schematisch dargestellt ist. Fig. 5 zeigt rein beispielhaft und lediglich schematisch einen Ausschnitt einer Station 10 im Bereich des einlaufenden Zugseils 20. Fig. 6 zeigt beispielhaft einen Ausschnitt einer Station 10 im Bereich des auslaufenden Zugseils 20.

Wie in Fig. 5 schematisch dargestellt, ist die optionale Antriebs- oder Abbremsvorrichtung, welche hier als erster Pneuförderer 31 realisiert ist, im Bereich des einlaufenden Zugseils 20 angeordnet. Der erste Pneuförderer 31 kann beispielsweise eine Vielzahl in einer Reihe angeordneter Pneus oder Rollen 31A aufweisen, wobei jede Rolle 31A um eine Drehachse 31B drehbar und durch einen Rollenantrieb (nicht gezeigt) um die Drehachse 31B rotierbar ist. Insbesondere sind die Rollen 31B derart rotierbar, dass eine Drehzahl der Rollen 31A in Fahrtrichtung F von einer ersten Rolle 31A der Reihe zu der letzten Rolle 31A der Reihe stetig abnimmt. Wie in Fig. 5 ferner schematisch gezeigt ist, kann sich die Führungsschiene 40 parallel zu bzw. gegenüberliegend der Rollen 31A erstrecken. Eine beim ersten Pneuförderer 31 einfahrendes Fahrzeug mit Kabine 52 wird beispielsweise im einem Zeitbereich von 3 bis 10 Sekunden, vorzugsweise in einem Zeitbereich von 4 bis 6 Sekunden von einer Einfahrgeschwindigkeit, welche beispielsweise mehr als 6 m/s beträgt, auf eine erste Schienengeschwindigkeit von beispielsweise weniger als 1m/s abgebremst. Zum Abbau der kinetischen Energie des einfahrenden Fahrzeuges steht somit ein Zeitbereich von 3 bis 10 Sekunden oder von 4 bis 6 Sekunden zur Verfügung, während dem der Antrieb 56 während dem Einfahren in die Station generatorisch betrieben wird, um mit der dadurch erzeugten elektrischen Energie die Energiespeichervorrichtung 58 zu laden. Beim Einfahren in die Station werden vorzugsweise sowohl die erste elektrische Maschine 3A als auch die zweite elektrische Maschine 3B jedes Antriebs 56 generatorisch betrieben. Ein Fahrzeug 50 umfasst zumindest einen einzigen Antrieb 56, und vorzugsweise, wie in Figur 5 dargestellt, zwei in Fahrtrichtung F nacheinander angeordnete Antriebe 56, wobei auch zusätzliche, in Fahrtrichtung F gegenseitig beabstandete Antriebe 56 angeordnet sein, können, beispielsweise drei, vier oder fünf. Es ist auch möglich beim Einfahren auf den ersten Pneuförderer 31 zu verzichten, wenn die gesamte Bremsleistung von Fahrzeug 50 bzw. dessen Antriebe 56 aufgenommen wird bzw. erbracht wird.

Wie in Fig. 6 beispielhaft gezeigt, kann die Beschleunigungsvorrichtung als zweiter Pneuförderer 32 realisiert sein, welcher im Bereich des auslaufenden Zugseils 20 angeordnet ist. Der zweite Pneuförderer 32 kann beispielsweise eine Vielzahl in einer Reihe angeordneter Pneus oder Rollen 32A aufweisen, wobei jede Rolle 32A um eine Drehachse 32B drehbar und durch einen Rollenantrieb (nicht gezeigt) um die Drehachse 32B rotierbar ist. Insbesondere sind die Rollen 32B derart rotierbar, dass eine Drehzahl der Rollen 32A von einer ersten Rolle 32A der Reihe zu der letzten Rolle 32A der Reihe stetig zunimmt. Wie in Fig. 6 ferner schematisch gezeigt ist, kann sich die Führungsschiene 40 parallel zu bzw. gegenüberliegend der Rollen 32A erstrecken.

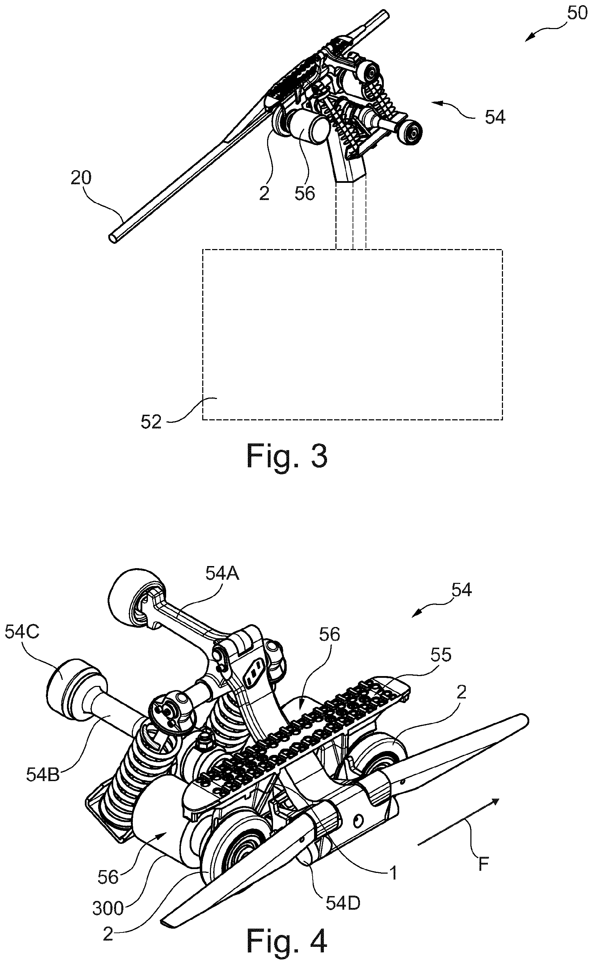

Die Führungsschiene 40 erstreckt sich allgemein in einem Bereich zwischen dem einlaufenden Zugseil 20 und der Beschleunigungsvorrichtung 32. Wie in Fig. 6 beispielhaft gezeigt ist, kann optional eine seitliche Führung 41 vorgesehen sein, welche seitlich einer Führungsfläche der Führungsschiene 40 angeordnet ist, um ein seitliches Abrutschen der Laufrolle 2 von der Führungsschiene 40 zu verhindern. Weiterhin kann eine Tragschiene 42 vorgesehen sein, welche sich parallel zur Führungsschiene 40 erstreckt, wie dies in Fig. 6 beispielhaft gezeigt ist. Wie in Figur 4 dargestellt umfasst die Klemmvorrichtung 54 im dargestellten Beispiel eine Stützrolle 54C und zwei Laufrollen 2. Die Laufrollen sind von der Führungsschiene 40 gehalten und die Stützrolle 54C ist von der Tragschiene 42 gehalten, sodass die Führungsschiene 40 und die Tragschiene 42 eine gemeinsame Schiene ausbilden, entlang welcher sich die Klemmvorrichtung 54 bewegt. An der Tragschiene 42 oder der Führungsschiene 40 können beispielsweise Sensoren, Leitungen oder ähnliche Funktionskomponenten der Seilbahnanlage 100 angebracht sein. Die Klemmvorrichtung 54 ist in der Lage sich elektromotorisch angetrieben selbsttätig entlang der gemeinsamen Schiene zu bewegen, sodass das Fahrzeug 50 umfassend die Klemmvorrichtung 54 und die daran hängende Kabine 52 selbsttätig bewegt wird. Wieder unter Bezugnahme auf Fig. 2, kann das Fahrzeug 50 eine Kabine 52, eine Klemmvorrichtung 54, einen Antrieb 56, eine elektrische Energiespeichervorrichtung 58 und eine Steuerungsvorrichtung 59 aufweisen.

Fig. 3 zeigt rein beispielhaft ein Fahrzeug 50, welches mittels der Klemmvorrichtung 54 direkt an das Zugseil 20 gekoppelt ist. Die Kabine 52 kann beispielsweise zur Personenbeförderung ausgelegt sein. Insbesondere kann die Kabine 52 als geschlossene Kabine realisiert sein, wie dies in Fig. 3 beispielhaft angedeutet ist. Jedoch ist die Erfindung nicht hierauf beschränkt. Selbstverständlich kann die Kabine 52 auch ein offener Sitz für eine oder mehrere Personen sein oder allgemein ein Behälter, wie z.B. ein Lastenkorb oder ähnliches.

Eine Klemmvorrichtung 54 ist in Fig. 4 beispielhaft dargestellt. Die Klemmvorrichtung 54 umfasst ein Traggestell 1, zumindest eine an dem Traggestell 1 um eine Drehachse D drehbar gelagerte Laufrolle 2 und den Antrieb 56. Wie in Fig. 4 beispielhaft dargestellt ist, kann die Klemmvorrichtung 54 besonders bevorzugt zwei in Förderrichtung F nacheinander folgend angeordneten Laufrollen 2 aufweisen, wobei vorzugsweise für jede Laufrolle 2 je ein separater Antrieb 56 vorgesehen ist. Eine derartige Ausgestaltung mit zwei Laufrollen 2 mit je einem separatem Antrieb 56 weist den Vorteil einer redundanten Ausgestaltung auf, weil bei einem Defekt eines der Antriebe 56 das Fahrzeug immer noch selbsttätig entlang der gemeinsamen Schiene bewegt werden kann.

Wie in Fig. 4 weiterhin sichtbar, können der Antrieb 56 und die Laufrolle 2 an entgegengesetzten Seiten des Traggestells 1 angeordnet sein. Der Antrieb 56 kann an dem Traggestell 1 festgelegt sein, beispielsweise kann ein Gehäuse 300 des Antriebs 56 an dem Traggestellt 1 befestigt, z.B. mit diesem verschraubt sein. Wie in Fig. 4 weiterhin beispielhaft gezeigt, kann die Klemmvorrichtung 54 eine Angriffsfläche 55 zur Kontaktierung mit den Pneus 31A, 32A der Pneuförderer 31, 32 aufweisen. Die Angriffsfläche 55 kann beispielsweise abgewandt von der Laufrolle 2 orientiert und an einem mit dem Traggestellt 1 fest verbundenen Steg 4 vorgesehen sein, wie dies in Fig. 4 beispielhaft gezeigt ist.

Die Klemmvorrichtung 54 umfasst ferner einen Klemmmechanismus, welcher zur lösbaren Kopplung an das Zugseil 20 ausgebildet ist. Wie in Fig. 4 rein beispielhaft gezeigt, kann der Klemmmechanismus einen Steuerhebel 54A, eine Achse 54B, eine Stützrolle 54C und Klemmbacken 54D aufweisen. Die Achse 54B ist fest mit dem Traggestell 1 verbunden und der Steuerhebel 54A ist an dem Traggestellt 1 relativ zu der Achse 54B bewegbar gelagert, wobei die Klemmbacken 54D derart kinematisch an das Traggestell 1 und den Steuerhebel 54A gekoppelt sind, dass diese durch eine Bewegung des Steuerhebels 54A relativ zur Achse 54B zwischen einer Klemmstellung, in welchen das Zugseil 20 reibschlüssig zwischen den Backen 54D eingeklemmt ist, und einer offenen Stellung bewegbar sind, in welcher die Backen 54D von dem Zugseil 20 gelöst sind. Grundsätzlich sind auch andere Klemmmechanismen denkbar.

Der Klemmmechanismus kann insbesondere durch eine mechanische Betätigungsstruktur (nicht gezeigt), z.B. in Form einer Schienenanordnung, automatisiert beim Einfahren des Fahrzeugs 50 in die Station 10 und beim Ausfahren des Fahrzeugs 50 aus der Station 10 betätigbar sein.

Wie insbesondere in den Fign. 4 und 5 schematisch dargestellt ist, ist die Laufrolle 2 der Klemmvorrichtung 54 an die Führungsschiene 40 koppelbar, insbesondere derart, dass die Laufrolle 2 an der Führungsschiene 40 rollt und da Fahrzeug 50 mittels der Laufrolle 2 an der Führungsschiene 40 gehalten wird. Auf die Tragschiene 42 könnte verzichtet werden. Bevorzugt wird jedoch eine gemeinsame Schiene umfassen die Führungsschiene 40 und die Tagscheine 42 verwendet, um die Klemmvorrichtung 54 zu tragen und deren Bewegung innerhalb der Station 10 zu leiten.

Das Fahrzeug 50 kann somit durch die Klemmvorrichtung 54 durch Betätigung des Klemmmechanismus von dem Zugseil entkoppelt werden, wenn es in die Station 54 einfährt. Vor, während oder nach dem Entkoppeln vom Zugseil 20 kann das Fahrzeug 50 über die Laufrolle 2 an die Führungsschiene 40 gekoppelt und an dieser geführt oder von dieser getragen werden, wie dies in den Fign. 5 und 6 schematisch dargestellt ist. Nach dem Abkoppeln vom Zugseil 20, wenn die Laufrolle 2 an die Führungsschiene 40 gekoppelt ist, kann mittels der Antriebs- oder Abbremsvorrichtung bzw. des ersten Pneuförderers 31 ein Abbremsen des Fahrzeugs 50 erfolgen, wobei der als Generator betriebene Antrieb 56 das Fahrzeug 50 zusätzlich abbremst. Wenn die Antriebs- oder Abbremsvorrichtung als Pneuförderer 31 realisiert ist, wie in Fig. 5 beispielhaft dargestellt, kommt die Angriffsfläche 55 der Klemmvorrichtung 54 nach dem Abkoppeln vom Zugseil 20 sukzessive mit den in Reihe angeordneten Pneus 31A in Kontakt, deren Drehzahl entlang der Reihe abnimmt. Dadurch wird der Klemmvorrichtung 54 über die Fläche 55 und damit dem Fahrzeug 50 die Bahngeschwindigkeit der Pneus 31A aufgezwungen. Grundsätzlich sind auch andere Antriebs- bzw. Abbremsvorrichtungen zum Abbremsen des Fahrzeugs 50 denkbar.

Nach einer Stationsdurchfahrt an der Führungsschiene 40 gelangt das Fahrzeug 50 zu der Beschleunigungsvorrichtung 32. Wenn diese, wie in Fig. 6 beispielhaft gezeigt, als Pneuförderer 32 realisiert ist, kommt die Angriffsfläche 55 der Klemmvorrichtung 54, während das Fahrzeug 50 über die Laufrolle 2 an der Führungsschiene 40 geführt ist, sukzessive mit den in Reihe angeordneten Pneus 32A in Kontakt, deren Drehzahl entlang der Reihe zunimmt. Dadurch wird der Klemmvorrichtung 54 über die Fläche 55 und damit dem Fahrzeug 50 die Bahngeschwindigkeit der Pneus 32A aufgezwungen und das Fahrzeug dadurch auf die Zugseilgeschwindigkeit beschleunigt. Auch in diesem Fall sind andere Gestaltungen der Beschleunigungsvorrichtung denkbar. Die Beschleunigungsvorrichtung 32 ist allgemein dazu ausgebildet, das Fahrzeug 50 vor einer Ankopplung der Klemmvorrichtung 54 an das auslaufende Zugseil 20 zu beschleunigen, während die Laufrolle 2 in einem an die Führungsschiene 40 gekoppelten Zustand ist

Wie in Fig. 2 schematisch gezeigt, weist der Antrieb 56 eine elektrische Maschine 3 auf, welche kinematisch an die Laufrolle 2 gekoppelt ist. Der Antrieb 56 dient dazu, die Laufrolle 2 anzutreiben bzw. zu rotieren. Hierzu ist eine durch die elektrische Maschine 3 angetriebene Welle kinematisch an die Laufrolle 2 gekoppelt. Die elektrische Maschine 3 ist sowohl als Motor als auch als Generator betreibbar. Das heißt, eine Rotation der Laufrolle 2 kann auch über die Welle als kinetische Energie an die elektrische Maschine 3 übertragen werden, welche die kinetische Energie in elektrische Energie umwandelt.

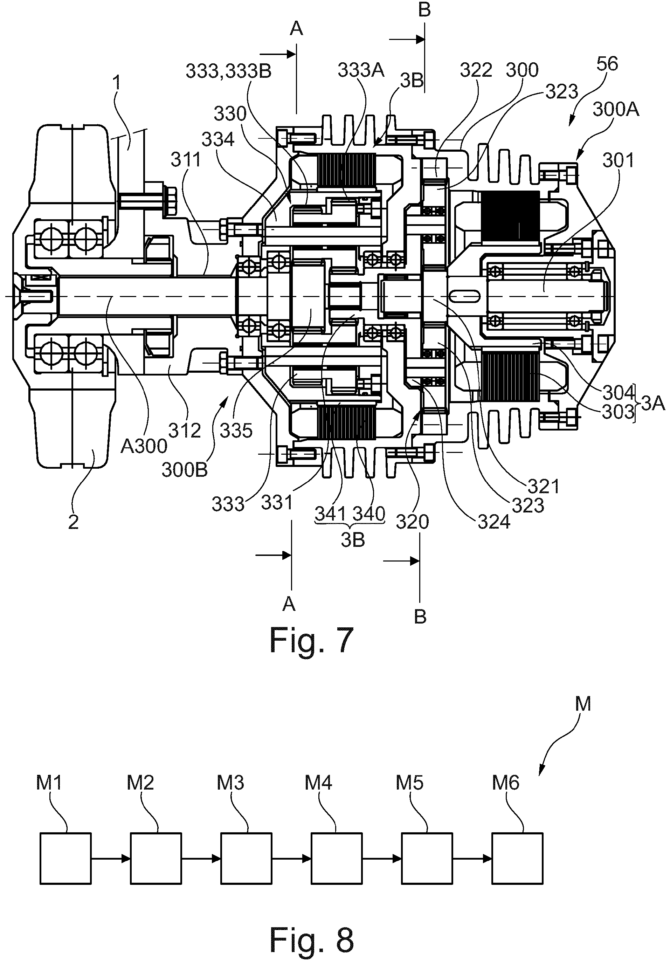

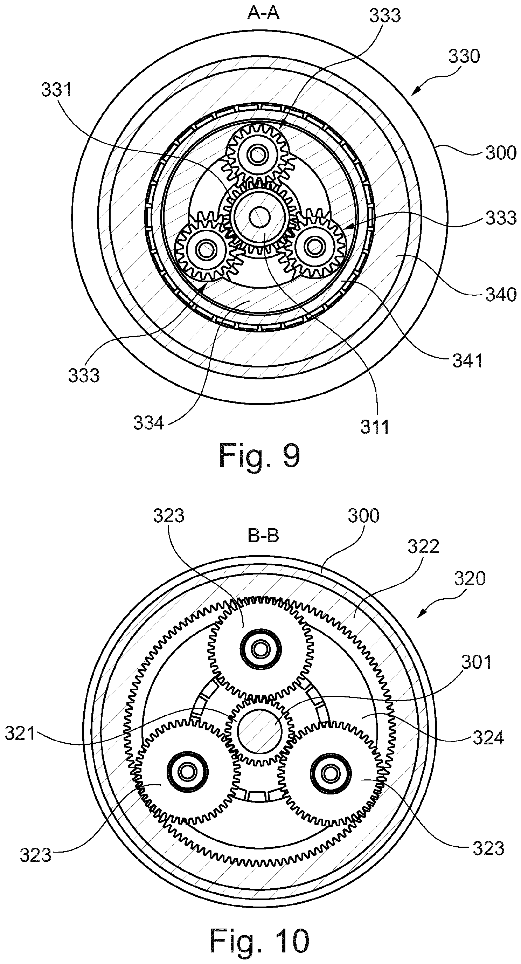

Fig. 7 zeigt rein beispielhaft eine Schnittansicht eines Antriebs 56. Fig. 9 zeigt eine Schnittansicht des Antriebs 56, welcher sich bei einem Schnitt entlang der in Fig. 7 eingezeichneten Linie A-A ergibt. Fig. 10 zeigt eine Schnittansicht des Antriebs 56, welcher sich bei einem Schnitt entlang der in Fig. 7 eingezeichneten Linie B-B ergibt. Der in den Fign. 7, 9 und 10 beispielhaft gezeigte Antrieb 56 kann beispielsweise als Antrieb für die Laufrolle 2 in der hierin beschriebenen Seilbahnanlage 100 eingesetzt werden. Jedoch ist der Antrieb 56 nicht hierauf beschränkt. Vielmehr kann der Antrieb 56 auch als Antriebseinheit eines Fahrzeugs, z.B. eine Straßenfahrzeugs, wie einem Kraftfahrzeug, einem Motorrad oder einem Fahrrad eingesetzt werden. Auch die Verwendung in Schienen- oder Luftfahrzeugen ist denkbar.

Wie in Fig. 7 beispielhaft gezeigt ist, kann der Antrieb 56 umfasst ein Gehäuse 300, eine erste elektrische Maschine 3A, eine zweite elektrische Maschine 3B und ein Getriebe 310 mit einer Verbindungswelle 311, einem ersten Teilgetriebe 320 und einem zweiten Teilgetriebe 330 aufweisen.

Das Gehäuse 300 kann beispielsweise ein erstes Teilgehäuse 300A und ein mit diesem lösbar verbundenes zweites Teilgehäuse 300B aufweisen, wie dies in Fig. 7 beispielhaft gezeigt ist. Alternativ kann das Gehäuse 300 auch einteilig realisiert sein. Allgemein definiert das Gehäuse 300 einen Innenraum, in welchem die erste und die zweite elektrische Maschine 3A, 3B und das Getriebe 310 angeordnet sind. Wie in Fig. 7 beispielhaft gezeigt, können die erste elektrische Maschine 3A und das erste Teilgetriebe 320 in dem ersten Teilgehäuse 300A aufgenommen sein und die zweite elektrische Maschine 3B und das zweite Teilgetriebe 320 können in dem zweiten Teilgehäuse 300B aufgenommen sein. Wenn der Antrieb 56, wie in Fig. 7 beispielhaft gezeigt, an der Seilbahnanlage 100 eingesetzt wird, kann das Gehäuse 300 beispielsweise über einen Adapter oder Flansch 312 an dem Traggestell 1 der Klemmvorrichtung 54 befestigt sein, insbesondere mit diesem verschraubt, wie dies in Fig. 7 beispielhaft gezeigt ist.

Wie in Fig. 7 beispielhaft gezeigt, kann die erste elektrische Maschine 3A einen ortsfest im Gehäuse 300 angeordneten Stator 303 und einen durch den Stator 303 rotierbaren Rotor 304 aufweisen. Der Rotor 304 kann beispielsweise innerhalb des Stators 303 angeordnet und rotierbar am Gehäuse 300 gelagert sein. Der Rotor 304 kann insbesondere drehfest an eine Rotorwelle 301 gekoppelt sein, wie in Fig. 7 beispielhaft gezeigt. Die erste elektrische Maschine 3A kann sowohl als Motor als auch als Generator betrieben werden.

Die zweite elektrische Maschine 3B kann ebenfalls einen ortsfest im Gehäuse 300 angeordneten Stator 340 und einen durch den Stator 340 rotierbaren Rotor 341 aufweisen. Wie in Fig. 7 beispielhaft gezeigt, kann der Stator 340 ortsfest im Gehäuse 300, insbesondere in dem zweiten Teilgehäuse 300B angebracht sein. Der Rotor 341 kann insbesondere als Hohlrotor ausgeführt sein, wie dies in Fig. 7 beispielhaft gezeigt ist, und innerhalb des Stators 341 angeordnet sein. Die zweite elektrische Maschine 3B kann sowohl als Motor als auch als Generator betrieben werden.

Das erste Teilgetriebe 320 kann beispielsweise als erstes Planetengetriebe realisiert sein, wie dies in den Fign. 7 und 10 beispielhaft gezeigt ist. Das erste Planetengetriebe 320 kann beispielsweise ein erstes Sonnenrad 321, welches mit einer Rotorwelle 301 der ersten elektrischen Maschine 3A verbunden ist, aufweisen. Das erste Sonnenrad 321 bildet somit eine Eingangsschnittstelle des ersten Teilgetriebes 320. Ferner kann das erste Planetengetriebe 320 ein erstes Hohlrad, welches ortsfest in dem Gehäuse 300, insbesondere dem ersten Teilgehäuse 300A angeordnet ist, und zumindest zwei erste Planetenräder 323 aufweisen, welche an einem ersten Planetenträger 324 gelagert sind. Der erste Planetenträger 324 ist drehbar an dem Gehäuse 300, z.B. in einer Öffnung des zweiten Teilgehäuses 300B gelagert, wie dies in Fig. 7 beispielhaft gezeigt ist. Die ersten Planetenräder 323 stehen dem ersten Sonnenrad 321 und dem ersten Hohlrad 322 in Eingriff. Der erste Planetenträger 324 bildet somit eine erste Ausgangsschnittstelle des ersten Teilgetriebes 320. Wie in Fig. 10 beispielhaft gezeigt, können z.B. drei erste Planetenräder 323 an dem ersten Planetenträger 324 vorgesehen sein.

Allgemein weist das erste Teilgetriebe 320 somit eine an den Rotor 304 der ersten elektrischen Maschine 3A gekoppelte Eingangsschnittstelle und eine erste Ausgangsschnittstelle auf, wobei das erste Teilgetriebe 320 dazu ausgebildet ist, ein Drehmoment zwischen der Eingangsschnittstelle und der ersten Ausgangsschnittstelle zu wandeln.

Das zweite Teilgetriebe 330 kann durch ein zweites Planetengetriebe realisiert sein, wie dies in den Fign. 7 und 9 beispielhaft gezeigt ist. Wie insbesondere in Fig. 7 erkennbar, kann das zweite Planetengetriebe 330 ein zweites Sonnenrad 331 aufweisen, welches mit dem ersten Planetenträger 324 des ersten Teilgetriebes 320 verbunden ist, insbesondere drehfest. Somit bildet das zweite Sonnenrad 331 eine erste Eingangsschnittstelle des zweiten Teilgetriebes 330, welche mit der ersten Ausgangsschnittstelle des ersten Getriebes 320 zur Drehmomentübertragung verbunden ist.

Wie in Fig. 7 weiterhin erkennbar ist, kann das zweite Planetengetriebe 330 einen drehbar in dem Gehäuse 300 gelagerten zweiten Planetenträger 334 aufweisen. Der zweite Planetenträger 334 kann insbesondere innerhalb des Hohlrotors 341 der zweiten elektrischen Maschine 3B angeordnet und drehfest mit diesem verbunden sein. Allgemein kann der zweite Planetenträger 334 kinematisch an den Rotor 341 der zweiten elektrischen Maschine 3B gekoppelt sein. Der zweite Planetenträger 334 bildet somit eine zweite Eingangsschnittstelle des zweiten Teilgetriebes 330.

Wie in Fig. 7 beispielhaft dargestellt, können der erste und der zweite Planetenträger 324, 334 koaxial zueinander angeordnet sein, insbesondere koaxial zu einer zentralen Getriebeachse A300.

Wie in Fig. 7 außerdem gezeigt ist, kann das zweite Planetengetriebe 330 zumindest zwei an dem zweiten Planetenträger 334 drehbar gelagerte zweite Planetenräder 333 aufweisen. Wie in Fig. 9 gezeigt, können beispielsweise drei zweite Planetenräder 333 vorgesehen sein. Wie in den Fign. 7 und 9 beispielhaft gezeigt, können die zweiten Planetenräder 333 jeweils als Planetenstufen realisiert sein, welche einen ersten Zahnkranz 333A und einen zweiten Zahnkranz 333B aufweisen, wobei der erste und der zweite Zahnkranz 333A, 333B optional verschiedene Durchmesser aufweisen. Die zweiten Planetenräder 333, insbesondere der erste Zahnkranz 333A der zweiten Planetenräder 333, stehen im Eingriff mit dem zweiten Sonnenrad 331. Ferner stehen die zweiten Planetenräder 333, insbesondere der zweite Zahnkranz 333B der zweiten Planetenräder 333, im Eingriff mit einem Verbindungsrad 335, welches drehfest mit der Verbindungswelle 311 verbunden ist. Das Verbindungsrad 335 bildet somit eine zweite Ausgangsschnittstelle des zweiten Teilgetriebes 330.

Die Verbindungswelle 335 kann insbesondere koaxial zu der zentralen Getriebeachse A300 angeordnet sein. Dies gilt optional auch für die Rotorwelle 301 der ersten elektrischen Maschine 3A. Im Falle der Seilbahnanlage 100 kann die Laufrolle 2 drehfest mit der Verbindungswelle 335 verbunden sein, wie dies in Fig. 7 beispielhaft gezeigt ist. Bei anderen Anwendungen des Antriebs 56 kann ein anderes anzutreibendes Teil, beispielsweise ein Rad, eine Kette, ein Riemen oder dergleichen kinematisch an die Verbindungswelle 335 gekoppelt werden.

Die erste und die zweite elektrische Maschine 3A, 3B können gemeinsam betrieben werden, wobei ein von der ersten elektrischen Maschine 3A erzeugtes oder aufgenommenes Drehmoment mit durch das zweite Teilgetriebe 330 mit einem von der zweiten Elektrischen Maschine 3B erzeugten Drehmoment überlagert werden kann. Allgemein ist das zweite Teilgetriebe 33 dazu ausgebildet, ein Drehmoment der ersten Eingangsschnittstelle und ein Drehmoment der zweiten Eingangsschnittstelle zu überlagern und die Drehmomente der ersten und der zweiten Eingangsschnittstelle in ein Drehmoment der Ausgangsschnittstelle zu wandeln und umgekehrt.

Nachfolgend wird wieder auf Fig. 2 Bezug genommen um die Seilbahnanlage 100 weiter zu erläutern. Wie in Fig. 2 schematisch gezeigt, ist die elektrische Energiespeichervorrichtung 58, elektrisch mit der elektrischen Maschine 3 des Antriebs 56 verbunden. Die Energiespeichervorrichtung 58, welche z.B. in einem Boden oder einer anderen Komponente der Kabine 52 untergebracht sein kann, ist als Akkumulator realisiert. Somit kann die elektrische Energiespeichervorrichtung 58 elektrische Energie abgeben, um die elektrische Maschine 3 anzutreiben, wenn diese als Motor betrieben wird. Umgekehrt kann die von der elektrischen Maschine 3 in einem Generatorbetrieb erzeugte elektrische Energie in die Energiespeichervorrichtung 58 eingespeist werden.

Die Steuerungsvorrichtung 59 ist in Fig. 2 lediglich als Block dargestellt und kann insbesondere eine leistungselektronische Schaltung, wie einen Umrichter oder dergleichen aufweisen. Optional kann die Steuerungsvorrichtung 59 auch einen Prozessor und einen durch den Prozessor lesbaren Datenspeicher, insbesondere einen nicht-flüchtigen Datenspeicher, wie z.B. einen Flash-Speicher, einen SSD-Speicher, einen HDD-Speicher oder dergleichen aufweisen. Die Steuerungsvorrichtung 59 ist mit der elektrischen Maschine 3 und vorzugsweise auch mit der Energiespeichervorrichtung 58 signalverbunden.

Die Steuerungsvorrichtung 59 ist insbesondere dazu eingerichtet, die elektrische Maschine 3 zwischen einem Generatorbetrieb und einem Motorbetrieb umzuschalten. Beispielsweise kann die Steuerungsvorrichtung 59 dazu eingerichtet sein, die erste und die zweite elektrische Maschine 3A, 3B anzusteuern, um deren Drehzahl, Drehrichtung und deren Betrieb als Motor oder Generator zu ändern. Insbesondere kann die Steuerungsvorrichtung 59 dazu eingerichtet sein, die elektrische Maschine 3 während eines Beschleunigens des Fahrzeugs 50 durch die Beschleunigungsvorrichtung 32 als Generator zu betreiben. Dadurch kann die Energiespeichervorrichtung 58 mithilfe der dem Fahrzeug 50 über die Beschleunigungsvorrichtung 32 zugeführten Energie aufgeladen werden. Alternativ oder zusätzlich kann die Steuerungsvorrichtung 59 dazu eingerichtet sein, die elektrische Maschine 3 während des Antriebs des Fahrzeugs 50 durch die Antriebs- oder Abbremsvorrichtung 31 als Generator zu betreiben.

Ferner kann die Steuerungsvorrichtung 59 dazu eingerichtet sein, die elektrische Maschine 3 im Bereich zwischen dem einlaufenden Zugseil 20 und der Beschleunigungsvorrichtung 32 zumindest abschnittweise als Motor zu betreiben. Somit kann das Fahrzeug 50 selbsttätig eine Stationsdurchfahrt oder andere Fahrmanöver, z.B. eine Vorwärtsfahrt mit anschliessender Rückwärtsfahrt oder ein Garagieren des Fahrzeuges, ausführen, wenn diese über die Laufrolle 2 an die Führungsschiene 40 gekoppelt ist.

In Fig. 8 ist schematisch und rein beispielhaft ein Ablauf eines Verfahrens M zum Betreiben einer Seilbahnanlage 100 dargestellt, welches im Folgenden, ohne hierauf beschränkt zu sein, unter Bezugnahme auf die oben erläuterte Seilbahnanlage 100 erläutert wird.

Wie in Fig. 8 gezeigt, wird das Fahrzeug 50 in Schritt M1 an dem Zugseil 20 befördert. Hierbei ist das Fahrzeug 50 über eine Klemmvorrichtung 54 lösbar an das Zugseil 20 gekoppelt. Beispielsweise befinden sich die Klemmbacken 54D des Klemmmechanismus in der Klemmstellung. Das Fahrzeug 50 wird in diesem Schritt M1 durch das Zugseil 20 gezogen, welches seinerseits durch den Seilantrieb 11 (Fig. 2) mit einer Zugseilgeschwindigkeit angetrieben wird, welche beispielsweise in einem Bereich zwischen 3 m/s und 10 m/s liegen kann.

In Schritt M2 erfolgt ein Abkoppeln des Fahrzeugs 50 von dem Zugseil 20. Hierzu wird die Klemmvorrichtung 54 vom Zugseil 20 gelöst, z.B. durch Betätigen des Steuerhebels 54A über ein Schienensystem der Station 10, so dass die Klemmbacken 54D in die offene Stellung bewegt werden. Ferner wird in Schritt M2 die Laufrolle 2 der Klemmvorrichtung 54 an die Führungsschiene 40 gekoppelt, insbesondere derart, dass das Fahrzeug 50 durch die Laufrolle 2 an der Führungsschiene 40 gehalten wird. Zudem wird vorzugsweise die Stützrolle 54C an die Tragschiene 42 gekoppelt.

In Schritt M2 kann die Laufrolle 2 vor dem Abkoppeln des Fahrzeugs 50 optional auf eine Drehzahl beschleunigt werden, bei welcher eine Bahngeschwindigkeit einer Kontaktfläche der Laufrolle 2 im Bereich der Zugseilgeschwindigkeit des Zugseils 20 liegt. Dies kann beispielsweise durch den Antrieb 56 der Klemmvorrichtung 54 erfolgen, indem die elektrische Maschine 3 als Motor betrieben wird.

In Schritt M3 wird das Fahrzeug 50 abgebremst, beispielsweise mithilfe des ersten Pneuförderers 31, wie oben beschrieben und in Fig. 5 schematisch dargestellt, oder mit einer anders gestalteten Antriebs- oder Bremsvorrichtung. Optional wird die elektrische Maschine 3 in Schritt M3 während des Abbremsens als Generator betrieben. Insbesondere wird die Laufrolle 2, das in Kontakt mit der Führungsschien 40 ist, einerseits durch die Trägheit des Fahrzeugs 50 und andererseits zumindest zeitweise dadurch angetrieben, dass das Fahrzeug 50 mittels der Antriebsvorrichtung bewegt wird. Dadurch kann die auf die Laufrolle 2 übertragene Energie über die als Generator betriebene elektrische Maschine 3, z.B. über die zweite elektrische Maschine 3B und/oder die erste elektrische Maschine 3A, in elektrische Energie umgewandelt und in die Energiespeichervorrichtung 58 eingespeist werden. Beim Abbremsen in Schritt M3 wird das Fahrzeug von der Zugseilgeschwindigkeit auf eine erste Schienengeschwindigkeit abgebremst.

Nach dem Abbremsen erfolgt in Schritt M4 ein selbsttätiges Fahren des Fahrzeugs 50 entlang der Führungsschiene 40. Hierbei wird die elektrische Maschine 3 des Antriebs 56 als Motor betrieben. Beispielsweise können die erste und die zweite elektrische Maschine 3A, 3B als Motor betrieben werden, um die Verbindungswelle 311 und damit die Laufrolle 2 zu rotieren. Die zum Betrieb der elektrischen Maschine 3 erforderliche elektrische Energie wird dabei der Energiespeichervorrichtung 58 entnommen. In Schritt M4 wird das Fahrzeug 50 somit selbsttätig fahrend mit einer zweiten Schienengeschwindigkeit entlang der Führungsschiene 40 gefördert. Die zweite Schienengeschwindigkeit kann insbesondere kleiner oder gleich der ersten Schienengeschwindigkeit sein. Beispielsweise kann die zweite Schienengeschwindigkeit kleiner 1m/s sein und zum Beispiel in einem Bereich zwischen 0,2 m/s und 0,5 m/s liegen.

In einem weiteren Schritt M5 erfolgt ein Beschleunigen des Fahrzeugs 50 mittels einer von aussen auf das Fahrzeug 50 einwirkenden Beschleunigungsvorrichtung 32, beispielsweise mit dem zweiten Pneuförderer 32, wie dies oben beschrieben wurde und in Fig. 6 schematisch dargestellt ist. Während des Beschleunigens M5 kann die elektrische Maschine 3, beispielsweise die zweite elektrische Maschine 3B und/oder die erste elektrische Maschine 3A, als Generator betrieben und dadurch die elektrische Energiespeichervorrichtung 58 des Fahrzeugs 50 aufgeladen werden. Somit wird beim Beschleunigen dem Fahrzeug 50 über die Beschleunigungsvorrichtung 32 Energie zugeführt. Da die Laufrolle 2 während des Beschleunigens an der Führungsschiene 40 abrollt, nimmt die Laufrolle ebenfalls kinetische Energie von der Beschleunigungsvorrichtung 32 auf, welche über die als Generator betriebene elektrische Maschine 3 in elektrische Energie umgewandelt und in die Energiespeichervorrichtung eingespeist wird. In Schritt M5 kann das Fahrzeug 50 insbesondere auf die Zugseilgeschwindigkeit beschleunigt werden.

In einem weiteren Schritt M6 erfolgt ein Ankoppeln des Fahrzeugs 50 an das auslaufende Zugseil 20, wobei die Klemmvorrichtung 54 wieder mit dem Zugseil 20 verbunden wird. Beispielsweise kann der Steuerhebels 54A über ein Schienensystem der Station 10 betätigt werden, so dass die Klemmbacken 54D von der offenen Stellung in die Klemmstellung bewegt werden.

Ein Vorteil dieses Verfahrens liegt darin, dass das Fahrzeug 50 durch den Antrieb 56 zumindest abschnittsweise selbsttätig entlang der Führungsschiene 40 bewegt werden kann, wobei die hierfür erforderliche elektrische Energie der vom Fahrzeug 50 mitgeführten Energiespeichervorrichtung 58 entnommen wird. Dadurch kann entlang der Führungsschiene 40 in einem Bereich zwischen der optionalen Antriebsvorrichtung 31 und der Beschleunigungsvorrichtung 32 ganz oder teilweise auf aufwendige externe Fördereinrichtungen verzichtet werden kann. Ferner ist eine externe Stromversorgung des Fahrzeugs 50 während des selbsttägigen Fahrens nicht zwangsläufig erforderlich, da der Abbremsvorgang bzw. ein Fördervorgang durch die optionale Antriebsvorrichtung 31 und/oder ein Beschleunigungsvorgang durch die Beschleunigungseinrichtung 32 dazu genutzt werden, über die Laufrolle 2 der elektrischen Maschine 3 des Antriebs 56 kinetische Energie zuzuführen, welche durch die elektrische Maschine 3 in elektrische Energie umgewandelt und in die Energiespeichervorrichtung 58 eingespeist wird.

Die Energiespeichervorrichtung 58 weist vorzugsweise eine derart hohe Speicherkapazität auf, dass das Fahrzeug 50 vorzugsweise eine Stunde oder eine halbe Stunde lang selbstfahrend entlang von Führungsschienen 40 fahren kann. Eine derart dimensionierte Speicherkapazität weist den Vorteil auf, dass sich das Fahrzeug 50 während einer gewissen Zeit auch dann noch zuverlässig selbstfahrend entlang von Führungsschienen 40 fahren kann, wenn die elektrische Maschine 3 nicht mehr oder zeitweise nicht mehr generatorisch betreibbar ist. Ein solcher Fall kann sich beispielsweise ergeben wenn eine Führungsschiene 40 im Bereich der Beschleunigungsvorrichtung vereist oder verschmutzt ist, sodass die Laufrolle 2 nicht mehr sauber auf der Führungsschiene 40 abrollt, und die elektrische Maschine 3 bei dieser Beschleunigungsvorrichtung nur noch teilweise oder gar nicht mehr generatorisch betreibbar ist.

In einem vorteilhaften Betriebsverfahren wird der in Figur 7 dargestellte Antrieb 56 derart betrieben, dass die erste elektrische Maschine 3A nur motorisch als Antriebsmotor betrieben wird, und dass die zweite elektrische Maschine 3B sowohl motorisch als auch generatorisch betrieben wird. In einem vorteilhaften Betriebsverfahren wird er Antrieb 56 wie folgt betrieben: Wenn das sich im Stillstand befindliche, an der Führungsschiene 40 hängende Fahrzeug 50 anfahren soll, so wird zuerst die erste elektrische Maschine 3A angefahren, bis auf eine Drehzahl von beispielsweise 2000 bis 3000 Umdrehungen pro Minute. Bei diesem Anfahren wird die zweite elektrische Maschine 3B als Generator betrieben, der die von der ersten elektrischen Maschine 3A gelieferte Leistung wieder aufnimmt, sodass die Verbindungswelle 311, welche mit der Laufrolle 2 verbunden ist, still steht, und das Fahrzeug 50 daher nicht bewegt wird. Die Drehzahl der Verbindungswelle 311 bzw. die über die Verbindungswelle 311 auf die Laufrolle 2 abgegebene Leistung kann somit mit Hilfe der zweiten elektrischen Maschine 3B geregelt werden. Der Antrieb 56 kann somit derart betrieben werden, als hätte dieser ein stufenloses Getriebe. Der Betrieb der ersten elektrischen Maschine 3A mit einer Drehzahl von beispielsweise 2000 bis 3000 Umdrehungen pro Minute ist insbesondere beim Anfahren des stillstehenden Fahrzeuges von Vorteil, weil, durch ein entsprechendes Ansteuern der zweiten elektrischen Maschine 3B, an der Verbindungswelle 311 in kurzer Zeit ein hohes Drehmoment erzeugt werden kann, welches zum Anfahren des Fahrzeugs erforderlich ist. Die zweite elektrische Maschine 3B kann abhängig von dem jeweiligen Erfordernis links- oder rechtsdrehend betrieben werden, um dadurch die Drehzahl der Verbindungswelle 311 und somit die Drehzahl der Laufrolle 2 zu regeln. Besonders vorteilhaft wird die erste elektrische Maschine 3A mit einer vorzugsweise konstanten Drehzahl betrieben, wobei die Drehzahl vorzugsweise derart gewählt ist, dass die erste elektrische Maschine 3A mit einem hohen Wirkungsgrad betrieben wird. Vorzugsweise wird die erste elektrische Maschine 3A mit einer Drehzahl betrieben, welche einen Wirkungsgrad von mehr als 80% aufweist. Die zweite elektrische Maschine 3B dient unter anderem zur Drehzahlregelung der Laufrolle 2, wobei die von der zweiten elektrischen Maschine 3b während dem Generatorbetrieb aufgenommene elektrische Leistung vorzugsweise wieder der Energiespeichervorrichtung 58 zugeführt wird. Dieses Verfahren weist den Vorteil auf, dass die erste elektrische Maschine 3A vorzugsweise kontinuierliche bei einer Drehzahl mit hohem Wirkungsgrad betriebe wird, während die Geschwindigkeit des Fahrzeugs über die zweite elektrische Maschine 3B geregelt wird, indem diese je nach Erfordernis generatorisch oder motorisch sowie linksdrehend oder rechtsdrehend betrieben wird. Der Antrieb 56 bzw. das Fahrzeug 50 ist vorzugsweise auch derart ausgestaltet, dass nicht nur horizontal verlaufende Führungsschienen 40, sondern auch solche mit gewissen Steigungen von weniger als 5% oder weniger als 10% selbstfahrend befahrbar sind, sodass das Fahrzeug 50 auch Rampen selbstfahrend überwinden kann. Die Laufrolle 2 weist vorzugsweise einen Durchmesser im Bereich zwischen 100 mm und 200 mm auf, und besonders bevorzugt einen Durchmesser im Bereich zwischen 150 mm und 200 mm auf, insbesondere um den Rollwiderstand gering zu halten.

## Patentansprüche

1. Verfahren (M) zum Betreiben einer Seilbahnanlage (100), umfassend:
- Befördern (M1) eines Fahrzeugs (50) an einem Zugseil (20), wobei das Fahrzeug (50) über eine Klemmvorrichtung (54) lösbar an das Zugseil (20) gekoppelt ist,
- Abkoppeln (M2) des Fahrzeugs (50) von dem Zugseil (20), wobei die Klemmvorrichtung (54) vom Zugseil (20) gelöst und eine Laufrolle (2) der Klemmvorrichtung (54) derart an eine Führungsschiene (40) gekoppelt wird, dass das Fahrzeug (50) durch die Laufrolle (2) an der Führungsschiene (40) gehalten wird;
- Abbremsen (M3) des Fahrzeugs (50);
- selbsttätiges Fahren (M4) des Fahrzeugs (50) entlang der Führungsschiene (40) durch Betreiben einer kinematisch an die Laufrolle (2) gekoppelten elektrischen Maschine (3) des Fahrzeugs (50) als Motor, wobei die elektrische Maschine (3) durch eine elektrische Energiespeichervorrichtung (58) des Fahrzeugs (50) mit elektrischer Energie versorgt wird;
- Beschleunigen (M5) des Fahrzeugs (50) mittels einer von aussen auf das Fahrzeug (50) einwirkenden Beschleunigungsvorrichtung (32); und
- Ankoppeln (M6) des Fahrzeugs (50) an das Zugseil (20), wobei die Klemmvorrichtung (54) mit dem Zugseil (20) verbunden wird,
wobei die elektrische Maschine (3) des Fahrzeugs (50) während des Abbremsens (M3) und/oder während des Beschleunigens (M5) als Generator betrieben und dadurch die elektrische Energiespeichervorrichtung (58) des Fahrzeugs (50) aufgeladen wird.

2. Verfahren nach Anspruch 1, wobei die elektrische Energiespeichervorrichtung (58) einzig mit von der elektrischen Maschine (3) erzeugten elektrischen Energie geladen wird.

3. Verfahren nach Anspruch 1 oder 2, wobei die elektrische Maschine (3) des Fahrzeugs (50) während des Abbremsens (M3) als Generator betrieben wird, wobei dem Fahrzeug (50) während des Abbremsens (M3) mittels einer von aussen auf das Fahrzeug einwirkenden Antriebsvorrichtung (31) zusätzliche Antriebsenergie zugeführt wird, und wobei diese zusätzliche Antriebsenergie während des Abbremsens (M3) von der als Generator betriebenen elektrischen Maschine (3) aufgenommen wird und dadurch die elektrische Energiespeichervorrichtung (58) aufgeladen wird.

4. Verfahren nach einem der vorhergehenden Ansprüche, wobei das Fahrzeug (50) beim Abbremsen (M3) von einer Zugseilgeschwindigkeit auf eine erste Schienengeschwindigkeit abgebremst wird, und wobei das Fahrzeug (50) danach von der als Motor betriebenen elektrischen Maschine (3) angetrieben wird und das Fahrzeug (50) selbsttätig fahrend mit einer zweiten Schienengeschwindigkeit entlang der Führungsschiene (40) gefördert wird.

5. Verfahren nach einem der vorhergehenden Ansprüche, wobei die elektrische Maschine (3) des Fahrzeugs (50) während des Beschleunigens (M5) als Generator betrieben und dadurch die elektrische Energiespeichervorrichtung (58) aufgeladen wird.

6. Verfahren nach einem der voranstehenden Ansprüche, wobei die Laufrolle (2) vor dem Abkoppeln (M2) durch Betreiben der elektrischen Maschine (3) als Motor auf eine Drehzahl beschleunigt wird, bei welcher eine Bahngeschwindigkeit einer Kontaktfläche der Laufrolle (2) im Bereich der Zugseilgeschwindigkeit des Zugseils (20) liegt.

7. Verfahren nach einem der Ansprüche 4 bis 6, wobei die zweite Schienengeschwindigkeit kleiner 1 m/s ist und vorzugsweise in einem Bereich zwischen 0,2 m/s und 0,5 m/s liegt.

8. Seilbahnanlage (100), aufweisend:
eine Station (10);
ein in die Station (10) einlaufendes und ein aus der Station (10) auslaufendes Zugseil (20);
eine an der Station (10) im Bereich des auslaufenden Zugseils (20) angeordnete Beschleunigungsvorrichtung (32);
eine sich im Bereich zwischen dem einlaufenden Zugseil (20) und der Beschleunigungsvorrichtung (32) erstreckende Führungsschiene (40); und
ein Fahrzeug (50) mit einer Kabine (52), einer Klemmvorrichtung (54), welche zur lösbaren Kopplung an das jeweilige Zugseil (20) ausgebildet ist und eine an die Führungsschiene (40) koppelbare Laufrolle (2) aufweist, einem Antrieb (56) mit einer kinematisch an die Laufrolle (2) gekoppelten elektrischen Maschine (3), welche als Motor und als Generator betreibbar ist, einer elektrischen Energiespeichervorrichtung (58), welche elektrisch mit der elektrischen Maschine (3) verbunden ist, und einer mit der elektrischen Maschine (3) verbundenen Steuerungsvorrichtung (59);
wobei die Beschleunigungsvorrichtung (32) dazu ausgebildet ist, das Fahrzeug (50) vor einer Ankopplung der Klemmvorrichtung (54) an das auslaufende Zugseil (20) zu beschleunigen, während die Laufrolle (2) in einem an die Führungsschiene (40) gekoppelten Zustand ist; und
wobei die Steuerungsvorrichtung (59) dazu eingerichtet ist, die elektrische Maschine (3) während des Beschleunigens des Fahrzeugs (50) durch die Beschleunigungsvorrichtung (32) als Generator zu betreiben und die elektrische Maschine (3) im Bereich zwischen dem einlaufenden Zugseil (20) und der Beschleunigungsvorrichtung (32) zumindest abschnittweise als Motor zu betreiben.

9. Seilbahnanlage nach Anspruch 8, wobei diese eine an der Station (10) im Bereich des einlaufendes Zugseils (20) angeordnete Antriebsvorrichtung (31) aufweist, wobei die Steuerungsvorrichtung (59) dazu eingerichtet ist, die elektrische Maschine (3) während des Antriebs des Fahrzeugs (50) durch die Antriebsvorrichtung (31) und/oder während des Beschleunigens des Fahrzeugs (50) durch die Beschleunigungsvorrichtung (32) als Generator zu betreiben und die elektrische Maschine (3) im Bereich zwischen der Antriebsvorrichtung (31) und der Beschleunigungsvorrichtung (32) zumindest abschnittweise als Motor zu betreiben.

10. Seilbahnanlage nach Anspruch 8 oder 9, wobei die Klemmvorrichtung (54) ein Traggestell (1) aufweist, an welchem die Laufrolle (2) um eine Drehachse (D) drehbar gelagert ist und an welchem der Antrieb (56) angebracht ist.

11. Seilbahnanlage nach einem der Ansprüche 8 bis 10, wobei der Antrieb (56) ein Gehäuse (300), eine erste elektrische Maschine (3A), eine zweite elektrische Maschine (3B) und ein an die erste und die zweite elektrische Maschine (3A; 3B) kinematisch gekoppeltes Getriebe (310) mit einer Verbindungswelle (311) aufweist, welche mit der Laufrolle (2) verbunden ist, wobei die erste und die zweite elektrische Maschine (3A; 3B) sowie das Getriebe in dem Gehäuse (300) aufgenommen sind.

12. Seilbahnanlage nach Anspruch 11, wobei:
das Getriebe (310) umfasst:
ein erstes Planetengetriebe (320) mit einem ersten Sonnenrad (321), welches mit einer Rotorwelle (301) der ersten elektrischen Maschine (3A) verbunden ist, einem ersten Hohlrad (322), welches ortsfest in dem Gehäuse (300) angeordnet ist, und zumindest zwei ersten Planetenrädern (323), welche an einem ersten Planetenträger (324) gelagert sind und mit dem ersten Sonnenrad (321) und dem ersten Hohlrad (322) in Eingriff stehen, und
ein zweites Planetengetriebe (330) mit einem drehbar in dem Gehäuse (300) gelagerten zweiten Planetenträger (334), zumindest zwei an dem zweiten Planetenträger (334) drehbar gelagerte zweite Planetenräder (333), einem drehfest mit dem ersten Planetenträger (324) verbundenen zweiten Sonnenrad (331), welches mit den zweiten Planetenrädern (333) in Eingriff steht, und einem Verbindungsrad (335), an welchem die Verbindungswelle (311) befestigt ist und welches mit den zweiten Planetenrädern (333) in Eingriff steht;
die zweite elektrische Maschine (3B) einen Stator (340) und einen innerhalb des Stators (340) angeordneten Hohlrotor (341) aufweist, welcher mit dem zweiten Planetenträger (334) verbunden ist; und
das zweite Planetengetriebe (330) innerhalb des Hohlrotors (341) angeordnet ist.

13. Seilbahnanlage nach Anspruch 12, wobei die zweiten Planetenräder (333) jeweils einen mit dem zweiten Sonnenrad (331) in Eingriff stehenden ersten Zahnkranz (333A) und einen mit dem Verbindungsrad (335) in Eingriff stehenden zweiten Zahnkranz (333B) aufweisen.

14. Seilbahnanlage nach Anspruch 12, wobei die Verbindungswelle (311) und die Rotorwelle (301) der ersten elektrischen Maschine (3A) koaxial zueinander angeordnet sind.

15. Klemmvorrichtung (54) zur lösbaren Verbindung einer Kabine (54) mit einem Zugseil (20) einer Seilbahnanlage (100), aufweisend:
ein Traggestell (1);
eine an dem Traggestell (1) drehbar gelagerte Laufrolle (2); und
einem Antrieb (56) mit einem Gehäuse (300), einer ersten elektrischen Maschine (3A), einer zweiten elektrische Maschine (3B) und einem an die erste und die zweite elektrische Maschine (3B) kinematisch gekoppeltes Getriebe mit einer Verbindungswelle, welche mit der Laufrolle (2) verbunden ist, wobei die erste und die zweite elektrische Maschine (3A;
3B) sowie das Getriebe (310) in dem Gehäuse (300) aufgenommen sind, wobei:
das Getriebe (310) umfasst:
ein erstes Planetengetriebe (320) mit einem ersten Sonnenrad (321), welches mit einer Rotorwelle (301) der ersten elektrischen Maschine (3A) verbunden ist, einem ersten Hohlrad (322), welches ortsfest in dem Gehäuse (300) angeordnet ist, und zumindest zwei ersten Planetenrädern (323), welche an einem ersten Planetenträger (324) gelagert sind und mit dem ersten Sonnenrad (321) und dem ersten Hohlrad (322) in Eingriff stehen, und
ein zweites Planetengetriebe (330) mit einem drehbar in dem Gehäuse (300) gelagerten zweiten Planetenträger (334), zumindest zwei an dem zweiten Planetenträger (334) drehbar gelagerte zweite Planetenräder (333), einem drehfest mit dem ersten Planetenträger (324) verbundenen zweiten Sonnenrad (331), welches mit den zweiten Planetenrädern (333) in Eingriff steht, und einem Verbindungsrad (335), an welchem die Verbindungswelle (311) befestigt ist und welches mit den zweiten Planetenrädern (333) in Eingriff steht;
die zweite elektrische Maschine (3B) einen Stator (340) und einen innerhalb des Stators (340) angeordneten Hohlrotor (341) aufweist, welcher mit dem zweiten Planetenträger (334) verbunden ist; und
das zweite Planetengetriebe (330) innerhalb des Hohlrotors (341) angeordnet ist.
